# EUROPÄISCHE PATENTSCHRIFT

(11) **EP 3 274 119 B1**
(45) Veröffentlichungstag und Bekanntmachung des Hinweises auf die Patenterteilung: **27.02.2019**
(21) Anmeldenummer: 16714314.8
(22) Anmeldetag: 23.03.2016
(51) Int. Cl.: B23F 23/10, B23F 23/12, B23F 5/16, B23Q 17/09

(54) **VERFAHREN UND VORRICHTUNG ZUM VERZAHNEN EINES WERKRADES MIT VERMINDERTEM FLANKENLINIENFORMFEHLER**
METHOD AND DEVICE FOR FORMING TEETH IN A WORKPIECE GEAR WITH REDUCED FLANK LINE SHAPE ERROR
PROCÉDÉ ET DISPOSITIF DE TAILLAGE D'UN PIGNON À ERREUR DE LIGNE DE DÉVELOPPANTE DE FLANC RÉDUITE

(30) Priorität: 23.03.2015 DE 102015104310
(43) Veröffentlichungstag der Anmeldung: 31.01.2018
(73) Patentinhaber: Profilator GmbH & Co. KG, 42329 Wuppertal (DE)
(72) Erfinder: SOBCZYK, Marcel, 42653 Solingen (DE)
(74) Vertreter: Grundmann, Dirk
(86) Internationale Anmeldenummer: PCT/EP2016/056308
(87) Internationale Veröffentlichungsnummer: WO 2016/150985

(56) Entgegenhaltungen:
- EP-A1- 2 570 217
- WO-A1-2014/034495
- DE-A1- 3 915 976
- DE-A1-102008 037 514
- DE-A1-102012 012 174
- DE-A1-102013 003 585
- US-A- 5 136 522

## Beschreibung

Die Erfindung betrifft ein Verfahren gemäß dem Oberbegriff des Anspruchs 1 zum Fertigen eines verzahnten Werkrades, bei dem das Werkrad auf einer Werkstückspindel und ein Schneidzähne aufweisendes Schneidwerkzeug auf eine Werkzeugspindel aufgespannt beziehungsweise befestigt sind, die Werkzeugspindel und die Werkstückspindel in einem eine periodische Nichtlinearität aufweisenden Kopplungsverhältnis ihrer Drehwinkel und/oder in einem sich periodisch ändernden Achsabstand voneinander drehangetrieben werden und die Schneidzähne spanabtragend mit linken und rechten Schneidkanten linke und rechte Zahnflanken der Zähne des Werkrades bearbeiten, wobei vor der Werkstückbearbeitung ein Rundlauffehler und/oder ein Teilungsfehler des Schneidwerkzeuges ermittelt wird und durch die periodische Nichtlinearität des Kopplungsverhältnisses und/oder durch die periodische Änderung des Achsabstandes die auf den Rundlauffehler und/oder den Teilungsfehler resultierenden Flankenlinienformfehler der rechten und/oder linken Zahnflanke vermindert werden. Ein derartiges Verfahren ist aus dem Dokument DE 10 2012 012 174 A1 bekannt.

Die Erfindung betrifft darüber hinaus eine Vorrichtung gemäß dem Oberbegriff des Anspruchs 6 zur Durchführung des Verfahrens, die eine Steuereinrichtung aufweist mit einer Werkstückspindel zum Aufspannen des Werkrades und einer Werkzeugspindel zum Aufspannen des Schneidwerkzeuges und mit einer Steuereinrichtung, die so eingerichtet ist, dass die Werkzeugspindel und die Werkstückspindel in einem eine periodische Nichtlinearität aufweisenden Kopplungsverhältnis ihrer Drehwinkel und/oder in einem sich periodisch ändernden Achsabstand voneinander drehantreibbar sind, so dass die Schneidzähne spanabtragend mit linken und rechten Schneidkanten linke und rechte Zahnflanken der Zähne des Werkrades bearbeiten, wobei die Steuereinrichtung so eingerichtet ist, dass mit einem vor der Werkstückbearbeitung ermittelten Rundlauffehler und/oder Teilungsfehler des mit der Werkzeugspindel verbundenen Schneidwerkzeuges zur Verminderung der aus dem Rundlauffehler und dem Teilungsfehler resultierenden Flankenlinienformfehler der rechten und linken Zahnflanken die Werkstückspindel und die Werkzeugspindel mit dem periodisch nicht linearen Kopplungsverhältnis antreibbar sind und/oder der Achsabstand periodisch veränderbar ist. Die Erfindung betrifft auch eine Vorrichtung gemäß dem Oberbegriff des Anspruchs 8. Diese Einrichtungen sind ebenfalls aus dem Dokument DE 10 2012 012 174 A1 bekannt.

Aus der DE 10 2012 012 174 A1 ist ein Verfahren zum Kompensieren einer Werkzeugrundlaufabweichung bekannt, bei dem die Werkzeugrundlaufabweichung abhängig von einer Drehposition einer Werkzeugachse bestimmt wird. Zudem wird eine Drehposition der Werkzeugdrehachse ermittelt. Es wird eine Kompensationsbewegung durchgeführt, um die Werkzeugrundlaufabweichung zu kompensieren. Die Kompensationsbewegung ist von der der der ermittelten Drehposition zugeordneten Werkzeugrundlaufabweichung abhängig.
Werkzeugmaschinen sind ferner bekannt aus den DE 10 2009 003 601 A1, DE 10 2008 037 514 A1, DE 10 2008 037 578 A1 und der DE 10 2005 049 528 A1 jeweils in Form von Wälzfräs- beziehungsweise Wälzschälwerkzeugen beschrieben.
Die DE 196 31 620 A1, DE 10 2011108 972 A1 und EP 1319 457 A2 befassen sich mit dem Problem, dass Werkstücke nur mit erheblichem Aufwand konzentrisch und verkippungsfrei im Werkstück-Aufnahmefutter eingespannt werden können. In den Druckschriften werden Sensoren zur Messung der relativen Lage der Achse des Werkstücks, bezogen auf die Drehachse der Werkstückaufnahme, beschrieben, mit denen der Achsversatz der Konturachse des Werkstücks gegenüber der Drehachse der Werkstückspindel und eine Verkippung der Konturachse des Werkstücks gegenüber der Werkstückspindelachse ermittelt werden können. Es wird eine elektronische Taumelkompensation der Bearbeitungskopplung vorgeschlagen in Form von Korrekturbewegungen des Werkzeugs während der Bearbeitung, um so die Fehlausrichtung der Werkstücke zu kompensieren.
Eine gattungsgemäße Werkzeugmaschine besitzt ein Maschinengehäuse beziehungsweise Maschinengestell, welches eine Werkstückspindel und eine Werkzeugspindel trägt. Die Werkzeugspindel und die Werkstückspindel sind gegeneinander versetzbar, so dass der Achskreuzwinkel der Werkzeugspindelachse und der Werkstückspindelachse und der Achsabstand der beiden Achsen einstellbar ist. Die beiden Spindeln besitzen Spannfutter zur Aufnahme eines Werkzeuges und eines zu verzahnenden Werkstücks. Die Werkzeugspindelachse und die Werkstückspindelachse werden jeweils von einer elektronisch gesteuerten Motoranordnung betrieben. Es handelt sich um elektronisch synchronisierte elektrische Einzelantriebe. Die Synchronisierung erfolgt mittels einer Steuereinrichtung, die so eingerichtet ist, dass die beiden Spindeln in einem vorgegebenen Drehzahlverhältnis zueinander drehangetrieben werden. Ein mit Schneidzähnen versehenes Schneidrad greift in das zu verzahnende Werkrad ein. Durch eine spanende Bearbeitung werden Zahnlücken einer Innen- oder einer Außenverzahnung in den Rohling eingearbeitet. Die Zähnezahl des Werkrades und die Zähnezahl des Schneidwerkzeuges unterscheiden sich dabei derart, dass ein bestimmter Zahn des Schneidrades erst nach einer mehrfachen Umdrehung des Schneidrades in dieselbe Zahnlücke eintritt. Bevorzugt wird zur Verzahnung eines Werkrades ein Schneidrad verwendet, dessen Zähnezahl so auf die Zähnezahl des Werkrades angepasst ist, dass der erstmalig erneute Eintritt eines bestimmten Zahnes in dieselbe Zahnlücke nach einer der Zähnezahl des Schneidrades entsprechenden Anzahl von Umdrehungen des Schneidrades erfolgt.

Bei diesem Verfahren, dessen Verbesserung sich die Erfindung zur Aufgabe gestellt hat, besitzen die linken und rechten Zahnflanken des Werkrades in Zahnflanken-Erstreckungsrichtung verlaufende periodische Flankenlinienformfehler, die darauf zurückzuführen sind, dass unmittelbar aufeinander in dieselbe Zahnlücke des Werkrades eintretende Schneidzähne des Schneidrades in Umfangsrichtung des Schneidrades weit auseinander liegen. Eine fehlerfreie Fertigung des Schneidrades ist mit den Mitteln des Standes der Technik nicht möglich. Es ist damit nicht zu vermeiden, dass die Schneidzähne des Schneidrades Rundlauffehler und die Schneidkanten der Schneidzähne Teilungsfehler aufweisen. Im Allgemeinen hat der Rundlauffehler und haben die Teilungsfehler der linken und rechten Schneidkante ausgehend von einer Winkelposition, bei der ein Fehlernullwert definiert wird, auf einer Umfangsposition ein Maximum und in einer dazu versetzten Position ein Minimum. Dazwischen variieren die Teilungsfehler im Allgemeinen auf einer glatten Kurve, so dass sich der Rundlauffehler beziehungsweise die Teilungsfehler in einer ersten Näherung als Kreisfunktion (Sinus, Kosinus) abbilden lassen. Da verfahrensbedingt in der Regel keine unmittelbar benachbarten Zähne des Schneidrades nachfolgend in dieselbe Zahnlücke des Werkrades eintreten, bilden sich die oben genannten Flankenlinienformfehler aus.

Mit dem erfindungsgemäßen Verfahren beziehungsweise mit der erfindungsgemäßen Vorrichtung sollen diese auf den Rundlauffehler beziehungsweise die Teilungsfehler des Werkzeuges resultierenden Flankenlinienformfehler durch eine periodische Relativverdrehung von Werkstückspindel und Werkzeugspindel beziehungsweise durch eine periodische Änderung des Achsabstandes der Werkstückspindelachse zur Werkzeugspindelachse vermindert werden. Beim Stand der Technik wird das Kopplungsverhältnis der Drehwinkel des Werkrades zum Drehwinkel des Werkzeugrades durch Korrekturbewegungen des Werkzeuges modifiziert, um eine Fehlausrichtung des Werkstücks zu kompensieren. Ohne eine derartige Kompensation wäre der Abtrag der beiden Drehwinkel in einem Diagramm eine Gerade, deren Steigung dem Drehzahlverhältnis entspricht. Durch eine periodische Nichtlinearität des Kopplungsverhältnisses wird ein sich periodisch änderndes Drehzahlverhältnis erreicht. Die Zahnflanke, die in Drehrichtung der Sollkontur der Zahnflanke vorläuft, greift zeitlich verzögert an der zugeordneten Zahnflanke des Zahnes des Werkrades an. Die Schneidkante, die gegenüber der Sollkontur der Schneidkante in Drehrichtung rückversetzt ist, greift zeitlich vorversetzt an der ihr zugeordneten Zahnflanke des Zahnes des Werkrades an. Die Darstellung des Verhältnisses der beiden Drehwinkel in einem Diagramm ist demzufolge eine von einer Geraden abweichende Kurve, die insbesondere Periodizitäten aufweist. Alternativ oder in Kombination dazu werden die Stellantriebe zur Verstellung der Achslage von Werkzeugspindel oder Werkstückspindel derart von der Steuereinrichtung der Werkzeugmaschine verlagert, dass sich der Achsabstand zur Kompensation des Rundlauffehlers periodisch ändert. Dies erfolgt sowohl bei der Herstellung von innen verzahnten Werkstücken als auch bei der Herstellung von außen verzahnten Werkstücken. An der Drehstellung, an der ein gegenüber der Sollkontur radial vorstehender Schneidzahn in das Werkrad eingreift, hat der Achsabstand einen vergrößerten Wert. An der Drehposition des Werkzeuges, an der ein nach radial einwärts versetzter Schneidzahn in das Werkrad eingreift, ist der Achsabstand geringfügig vermindert. Bei der Fertigung von Innenverzahnung ist der Achsabstand dann gegebenenfalls geringfügig vergrößert. Die Periodenlänge der Modifikation des Kopplungsverhältnisses oder der Modifikation des Achsabstandes kann der Drehzahl des Schneidrades entsprechen. Die Periodenlänge kann aber auch halb so lang sein oder 1/N-tel der Drehzahl der Werkzeugspindel sein.

Erfindungsgemäß werden die Rundlauffehler und die Teilungsfehler des auf der Werkstückspindel aufgespannten Schneidrades ermittelt. Hierzu ist am Maschinengehäuse oder am Maschinengestell ein entsprechendes Messwerkzeug vorgesehen. Hierdurch werden zusätzlich zu den Fehlern des Schneidwerkzeuges auch Aufspannfehler und Rundlauffehler der Werkzeugspindel berücksichtigt. Das erfindungsgemäße Verfahren kann bei einer Grobbearbeitung des Werkrades, also beim Verzahnen selbst durchgeführt werden. Es ist aber bevorzugt vorgesehen, dass die Drehzahlverhältnis-Kompensation beziehungsweise die Achsabstandskompensation bei einer Feinbearbeitung, bspw. bei einem Schlichtschritt, erfolgt. Bevorzugt erfolgt die Drehzahlverhältnis-Kombination ausschließlich bei der Feinbearbeitung beziehungsweise bei einem Schlichtschritt. Während bei der Grobbearbeitung die linken und die rechten Zahnflanken gleichzeitig bearbeitet werden, kann bei einer Feinbearbeitung eine Trennung vorgenommen werden, so dass die linke und die rechte Zahnflanke in aufeinanderfolgenden Arbeitsschritten jeweils gesondert bearbeitet werden. Bei dieser Feinbearbeitung können linke und rechte Teilungsfehler gesondert berücksichtigt werden. Das erfindungsgemäße Verfahren wird insbesondere beim Wälzschälen von Zahnrädern verwendet, bei dem ein zahnradförmiges Schneidrad verwendet wird, welches in einem Achskreuzwinkel zum Werkrad drehangetrieben wird. Der Vorschub erfolgt dabei in Erstreckungsrichtung der schräg- oder geradverzahnten Zähne des Werkrades. Bevorzugt werden elektronisch synchronisierte elektrische Einzelantriebe verwendet, die mit einer Frequenz von bis zu 150 Hz geregelt werden können.

Die erfindungsgemäße Vorrichtung besitzt eine Steuereinrichtung, die nach einem Steuerprogramm Steuerbefehle abarbeiten kann. Das Steuerprogramm beinhaltet die zuvor genannten Verfahrensschritte, so dass die erfindungsgemäße Werkzeugmaschine derart eingerichtet ist, dass sie nach dem beschriebenen Verfahren arbeitet.

Mit dem erfindungsgemäßen Verfahren werden sowohl die Rundlauffehler der linken als auch die Rundlauffehler der rechten Schneidkante vermessen und jeweils gesondert durch Korrekturbewegungen vermieden. Es kann zusätzlich aber auch alternativ dazu ein Rundlauffehler der Kopfschneidkante ermittelt werden und dieser gesondert kompensiert werden. Eine erfindungsgemäße Werkzeugmaschine besitzt hierzu ein dem Maschinengestell fest zugeordnetes Messwerkzeug.

Ein Ausführungsbeispiel der Erfindung wird nachfolgend anhand beigefügter Zeichnungen erläutert. Es zeigen:
- Fig. 1: ein Werkrad 11, welches um eine Drehachse 23 mit Hilfe einer nicht dargestellten Werkstückspindel drehangetrieben wird, und ein Schneidrad 1, welches um eine Drehachse 22 einer nicht dargestellten Werkzeugspindel drehantreibbar ist,
- Fig. 2: eine Stirnseitenansicht des Schneidrades 1 mit einer Messvorrichtung 21,
- Fig. 3: einen Zahn im Ausschnitt III der Figur 2 an einer Stelle B des Schneidrades 1,
- Fig. 4: einen Zahn im Ausschnitt IV der Figur 2 an einer Stelle C des Schneidrades 1,
- Fig. 5: den Ausschnitt V des Werkrades 11 in Figur 1,
- Fig. 6: den Schnitt gemäß der Linie VI-VI entlang einer Zahnflanke in Figur 5, wobei das Oberflächenprofil der Zahnflanke in Zahnerstreckungsrichtung stark vergrößert wiedergegeben ist,
- Fig. 7: den Rundlauffehler 7, den Teilungsfehler 8 der linken Schneidkante 3, den Teilungsfehler 9 der rechten Schneidkante 4 über den Umfang des Schneidrades 1, stark vergrößert,
- Fig. 8: den aus einem der Teilungsfehler 8, 9 resultierenden, als Sinusfunktion vereinfachten Korrekturwert des Drehwinkels ϕ₁ des Schneidrades 1, stark vergrößert,
- Fig. 9: den aus dem Rundlauffehler 7 resultierenden, als Sinusfunktion vereinfachten Korrekturwert des Achsabstandes a für eine Umdrehung des Schneidrades 1, stark vergrößert,
- Fig. 10: das Kopplungsverhältnis des Drehwinkels ϕ₁ des Schneidrades 1 zum Drehwinkel ϕ₂ des Werkrades zur Korrektur des linken Teilungsfehlers 8, stark vergrößert, und
- Fig. 11: das Kopplungsverhältnis des Drehwinkels ϕ₁ des Schneidrades 1 zum Drehwinkel ϕ₂ des Werkrades zur Kompensation des rechten Teilungsfehlers 9, stark vergrößert.

Die im Folgenden beschriebene Vorrichtung ist eine Werkzeugmaschine, die ein Gehäuse beziehungsweise ein Maschinengestell aufweist, wie es im Stand der Technik bekannt ist, weshalb weder das Maschinengestell, noch die daran befestigten Werkzeugspindel und Werkstückspindel dargestellt sind. Die Werkzeugmaschine besitzt die bekannten elektrischen Antriebsmittel, um die Neigungslage einer Werkzeugspindel beziehungsweise einer Werkstückspindel und den Achsabstand von Werkzeugspindel zu Werkstückspindel einzustellen und zu verändern. Die Werkzeugmaschine besitzt darüber hinaus zumindest zwei elektrische Einzelantriebe, die elektronisch synchronisiert sind und die jeweils der Werkstückspindel beziehungsweise der Werkzeugspindel zugeordnet sind. Eine Steuereinrichtung ist vorgesehen, mit der die Achsantriebe angesteuert beziehungsweise synchronisiert werden. Die Steuereinrichtung ist in der Lage, mit einer Regelfrequenz von bis zu 150 Hz das Drehzahlverhältnis von Werkstückspindel zu Werkzeugspindel zu beeinflussen. Die Werkzeugachse dreht beispielsweise mit einer Drehzahl von 400 U/min. Die Drehzahl der Werkstückspindel ist um das Verhältnis der Zähnezahl des Werkstücks zur Zähnezahl des Werkzeugs vermindert. Eine Überrollung des Werkstücks, nach der derselbe Schneidzahn 2 des Schneidrades 1 in dieselbe Lücke zwischen zwei Zähnen 12,12' des Werkrades 11 eintaucht, entspricht einer Anzahl von Umdrehungen des Schneidrades, die der Zähnezahl des Schneidrades entspricht.

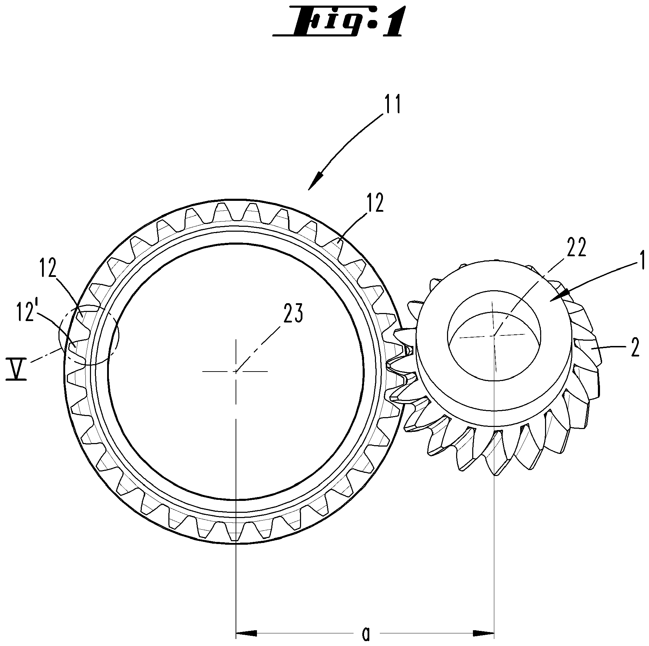

Die Figur 1 zeigt ein Schneidrad 1 in Form eines Wälzschälrades mit radial abstehenden, im Wesentlichen gleichmäßig über den Umfang verteilten Schneidzähnen 2. Die Drehachse 22 des Schneidrades 1 steht in einem vorgegebenen Achskreuzwinkel zur Drehachse 23 des Werkrades 11. Die Schneidzähne 2 greifen spanabhebend jeweils in eine Zahnlücke zwischen zwei Zähnen 12,12' des Werkrades 11. Durch einen Vorschub - bei einer Geradverzahnung in Richtung der Drehachse 23 des Werkrades 11 - werden linke Zahnflanken 13 und rechte Zahnflanken 14 des Zahnes 12 gefertigt. Dabei greifen linke Schneidkanten 3 und rechte Schneidkanten 4 des Schneidzahnes 2 des Schneidrades 1 in die Zahnlücke ein.

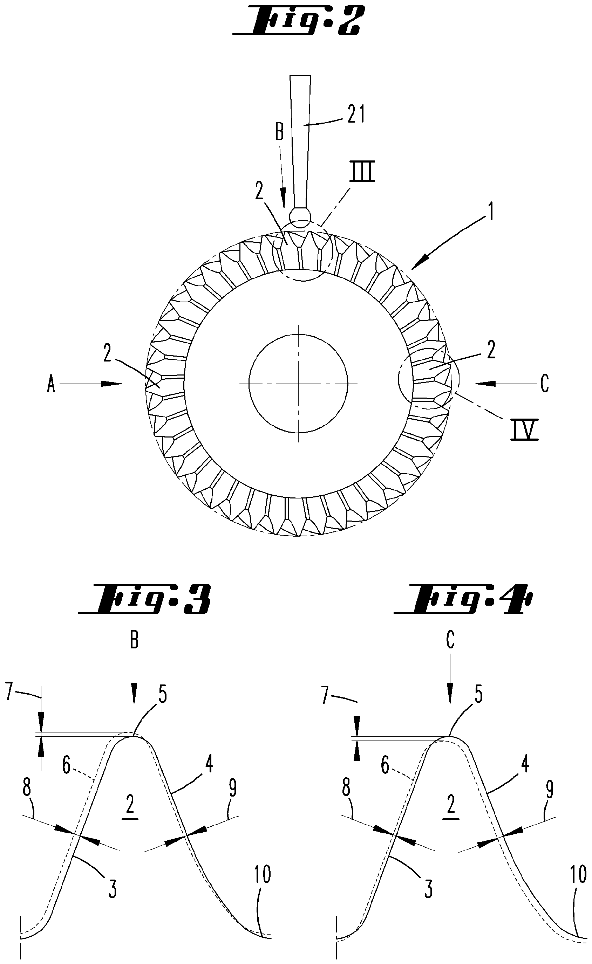

Der Schneidzahn 2 an der Markierung A definiert eine willkürliche Nullposition der Rundlauffehler 7, des linken Teilungsfehlers 8 und des rechten Teilungsfehlers 9. Die vergrößerten Darstellungen der Zähne 2 an den Positionen B, C in Figur 2 in den Figuren 3, 4 verdeutlichen qualitativ den Rundlauffehler 7 sowie den Teilungsfehler 8 der linken Schneidkante 3 und den Teilungsfehler 9 der rechten Schneidkante 4. Mit einer durchgezogenen Linie sind die Schneidkanten 3, 4 des Schneidzahnes 2 sowie die Kopfschneidkante 5 und die Fußkante 10 dargestellt. Mit der gestrichelten Linie 6 ist die exakte Sollkontur des Schneidzahnes 2 dargestellt. Die Abweichungen der Sollkonturlinie 6 von den Schneidkanten 3, 4 bilden einen linken Teilungsfehler 8 und einen rechten Teilungsfehler 9. Die qualitative Größe der Teilungsfehler 8, 9 verläuft etwa entlang einer Sinusfunktion ausgehend von der Position A über die Positionen B und C über den gesamten Umfang des Schneidrades 1. Der sinusförmige Verlauf mit einer Sinusperiodizität von der Umfangslänge des Schneidrades 1 ist allerdings nur eine erste Näherung.

Auch der Rundlauffehler 7 kann als eine Kreisbogenperiode über den Umfang des Schneidrades 1 angenähert werden.

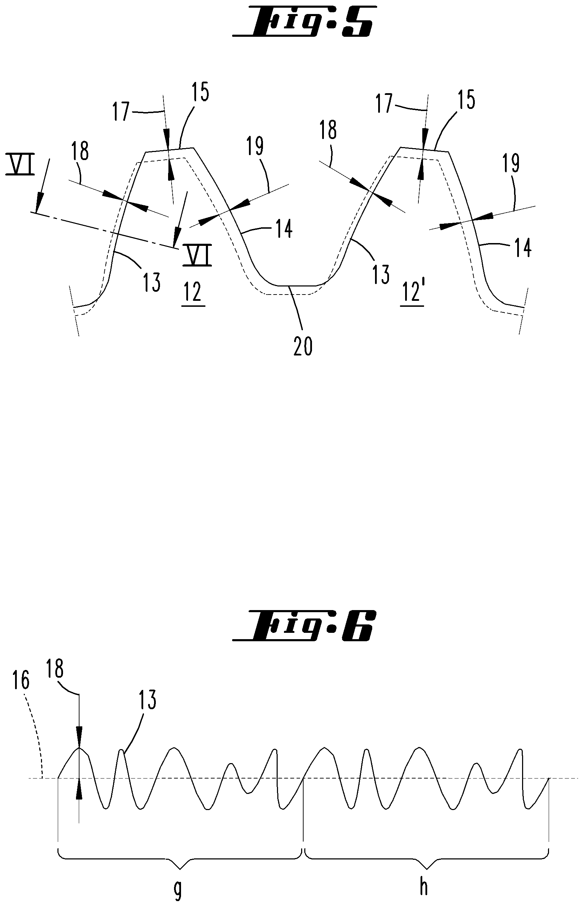

Bei der in Figur 1 dargestellten Bearbeitungsweise greifen unmittelbar benachbarte Zähne 2 des Schneidrades, die sich hinsichtlich ihrer Teilungsfehler nur geringfügig unterscheiden, nicht unmittelbar nachfolgend in dieselbe Zahnlücke des Werkrades 11 ein. Dies ist vom Übersetzungsverhältnis abhängig. Greift beispielsweise ein 30 Zähne aufweisendes Schneidrad in ein 31 Zähne aufweisendes Werkrad ein, so ist die Eingriffsfolge des Werkzeuges 1, 2, 3, 4, ...... , 30, 31, 1,2....... Unmittelbar benachbart liegende Zähne 12,12' des Werkrades 11 haben zwar in einer Querschnittsebene ähnliche Kopffehler 17 und linke beziehungsweise rechte Flankenfehler 18,19, wie es in der Figur 5 dargestellt ist. Da die in unmittelbarer Folge in dieselbe Zahnlücke eingreifenden Schneidzähne 2 aber über einen großen Umfangswinkel des Schneidrades 1 voneinander versetzt liegen, haben diese Zähne stark voneinander verschiedene Rundlauffehler 7 sowie Teilungsfehler 8, 9. Dies führt zu den in der Figur 6 stark übertrieben dargestellten Flankenlinienfehlern 18. Es handelt sich dabei um von Schnitt zu Schnitt gewissermaßen oszillierende Abweichungen der Zahnflanken-Konturlinie 13 von dem geraden Solllinienverlauf 16. Die Zahnflankenstrecke g ist die Strecke, in der das Werkrad 11 gegenüber dem Schneidrad 1 innerhalb einer Überrollung vorgeschoben wird. Der Flankenlinienfehler 13 wiederholt sich somit in den Zahnflankenstrecken g, h.

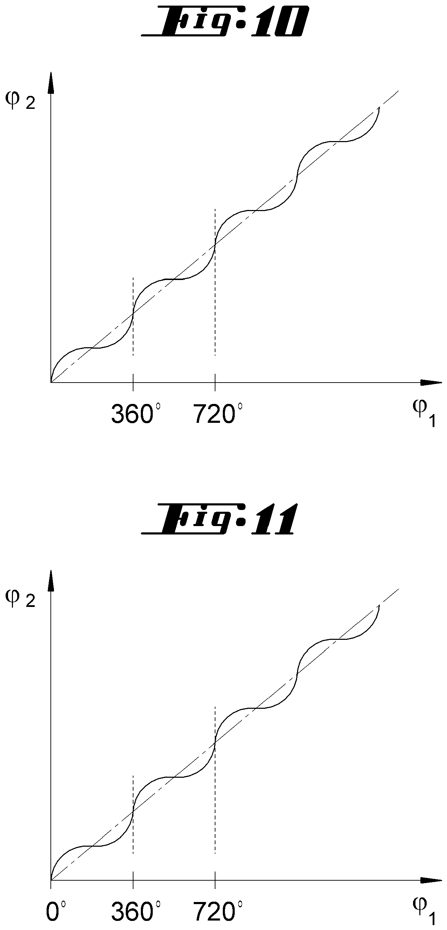

Die zuvor beschriebenen Fehler treten auf, wenn die Drehzahl des Schneidrades 1 in einem festen Verhältnis zur Drehzahl des Werkrades 11 steht, also das Kopplungsverhältnis der Drehwinkel ϕ₁, ϕ₂ von Schneidrad 1 und Werkrad 11 eine Gerade ist, wie sie in den Figuren 10 und 11 strichpunktiert dargestellt ist.

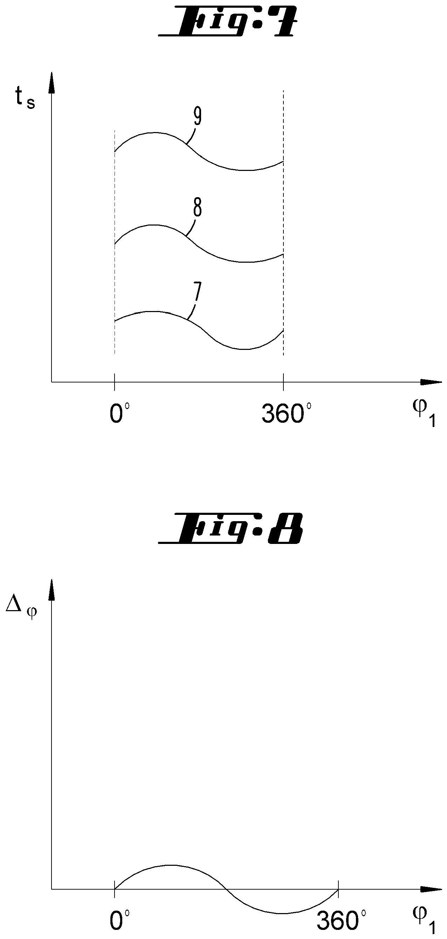

Mit dem erfindungsgemäßen Verfahren wird mittels einer am Maschinengestell oder Maschinengehäuse befestigten Messanordnung 21 die Abweichung der Lage der Kopfschneidkante 5, der linken Schneidkante 3 und der rechten Schneidkante 4 jedes Schneidzahnes 2 von der Idealkontur 6 gemessen. Die Messanordnung kann über entsprechende Positionierachsen mit dem Werkzeug in Kontakt gebracht werden. Es wird die räumliche Lage der linken Schneidkanten 3 und der rechten Schneidkanten 4 jedes Schneidzahnes 2 vermessen. Das Schneidrad 1 ist dabei im Futter der Werkzeugspindel mit dem nicht zu vermeidenden Rundlauffehler und gegebenenfalls Verkippungsfehler eingespannt. Es ergeben sich die drei in der Figur 7 dargestellten Messkurven, die rein qualitativ einen in etwa einer Kreisfunktion folgenden Verlauf über den gesamten Umfang des Schneidrades besitzen. Aus der Figur 7 ist zu entnehmen, dass die Kurven einen voneinander abweichenden Verlauf besitzen können.

Aus den Messkurven des Teilungsfehlers 8 der linken Schneidkante 3 und des Teilungsfehlers 9 der rechten Schneidkante 4 wird jeweils eine Winkelkompensationsfunktion gebildet, die in der Figur 8 dargestellt ist. Der Einfachheit halber hat die Winkelkompensationsfunktion hier einen Sinusverlauf. Für jeden Zahn entlang der Umfangslinie von 0 bis 360° des Schneidrades 1 ergibt sich ein Drehwinkel-Korrekturwert Δ, um den das Schneidrad 1 gegenüber dem Werkrad 11 entweder vorlaufen oder zurückbleiben muss, wenn der jeweilige Schneidzahn 2 im Schneideingriff ist. Hieraus resultiert ein modifiziertes Kopplungsverhältnis der Drehwinkel ϕ₂, ϕ₁ von Schneidrad 1 und Werkrad 11 beziehungsweise Werkzeugspindel und Werkstückspindel, wie es in der Figur 10 für die Kompensation des Teilungsfehlers 8 der linken Schneidkante 3 und in der Figur 11 zur Kompensation des Teilungsfehlers 9 der rechten Schneidkante 4 angegeben ist. Die Abweichungen von der Gerade sind zur Verdeutlichung stark übertrieben dargestellt. Es ist zu erkennen, dass die Kompensation eine periodische Nichtlinearität des Kopplungsverhältnisses ist, wobei die Periodenlänge im einfachsten Fall dem Umfangswinkel des Schneidrades 1 entspricht. Es sind auch Korrekturen höherer Ordnung möglich, indem kürzere Periodenlängen, beispielsweise 1/N-tel des Umfangswinkels verwendet werden.

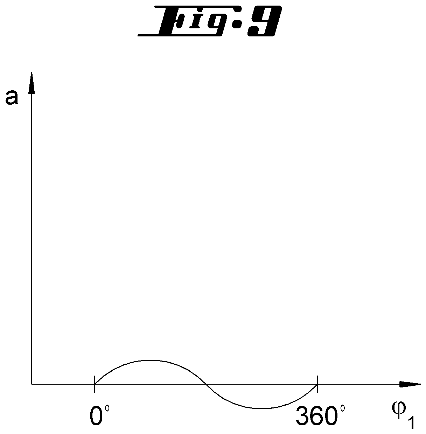

Zur Kompensation der Kopffehler 17 wird entsprechend der Figur 9 der Achsabstand a von Werkzeugspindel und Werkstückspindel periodisch geändert, wobei auch hier die Periodenlänge dem Umfang des Schneidrades 1 entspricht. Der Einfachheit halber besitzt auch hier der Korrekturwert den Verlauf einer Sinusfunktion. Auch hier sind Korrekturen höherer Ordnung möglich.

Mit der erfindungsgemäßen Werkzeugmaschine und dem erfindungsgemäß über Korrekturbewegungen angetriebenen Schneidrad 1 kann eine Vollverzahnung (Grob- und Feinverzahnung in einer Aufspannung) eines Werkrades 11 vorgenommen werden. Hierzu wird ein vorbereiteter, insbesondere rotationssymmetrischer, unverzahnter Rohling in das Futter der Werkstückspindel eingespannt. Bei einer erfindungsgemäßen Vollverzahnung ergeben sich nicht die im Stand der Technik erörterten Probleme, einen Rundlauffehler oder einen Verkippungsfehler des Werkstücks kompensieren zu müssen. Die mit dem erfindungsgemäßen Verfahren gefertigte Grobverzahnung des Werkrades erfolgt mit demselben Schneidwerkzeug 1, das auch die Schlichtbearbeitung durchführt. Die gefertigte Verzahnung hat eine Konturachse, die mit der Drehachse der Werkstückspindel zusammenfällt. Die Fertigung der Grobverzahnung kann ohne eine Berücksichtigung des Rundlauffehlers und/oder des Teilungsfehlers des Schneidwerkzeuges 1 durchgeführt werden. Es ist aber auch möglich, bei der Grobverzahnung bereits den Rundlauffehler und den Teilungsfehler des Schneidwerkzeuges 1 durch die oben beschriebenen Korrekturbewegungen zu kompensieren. Erfindungsgemäß wird zumindest beim Schlichtschnitt der Rundlauffehler und der Teilungsfehler des Schneidwerkzeuges 1 durch die oben beschriebenen Korrekturbewegungen berücksichtigt.

**Bezugszeichenliste:**

| | | | |
|---|---|---|---|
| 1 | Schneidwerkzeug/-rad | A | Position |
| 2 | Schneidzahn | B | Position |
| 3 | Schneidkante | C | Position |
| 4 | Schneidkante | | |
| 5 | Kopfschneidkante | | |
| 6 | Sollkontur, Idealkontur | | |
| 7 | Rundlauffehler | | |
| 8 | Teilungsfehler | | |
| 9 | Teilungsfehler | a | Achsabstand |
| 10 | Fußkante | g | Zahnflankenstrecke, |
| 11 | Werkrad | h | Zahnflankenstrecke |
| 12 | Zahn | | |
| 12' | Zahn | | |
| 13 | Zahnflanke | Δ | Korrekturwert |
| 14 | Zahnflanke | ϕ₁ | Drehwinkel |
| 15 | Zahnkopf | ϕ₂ | Drehwinkel |
| 16 | Sollkontur | | |
| 17 | Kopffehler | | |
| 18 | Flankenteilungsfehler links | | |
| 19 | Flankenteilungsfehler rechts | | |
| 20 | Zahnfuß | | |
| 21 | Messwerkzeug | | |
| 22 | Drehachse (Werkzeug) | | |
| 23 | Drehachse (Werkstück) | | |

## Patentansprüche

1. Verfahren zum Fertigen eines verzahnten Werkrades (11), bei dem das Werkrad (11) auf einer Werkstückspindel und ein Schneidzähne (2) aufweisendes Schneidwerkzeug (1) auf eine Werkzeugspindel aufgespannt beziehungsweise befestigt sind, die Werkzeugspindel und die Werkstückspindel in einem eine periodische Nichtlinearität aufweisenden Kopplungsverhältnis ihrer Drehwinkel (ϕ₂, ϕ₁) und/oder in einem sich periodisch ändernden Achsabstand (a) voneinander drehangetrieben werden und die Schneidzähne (2) spanabtragend mit linken und rechten Schneidkanten (3, 4) linke und rechte Zahnflanken (13, 14) der Zähne (12, 12') des Werkrades (11) bearbeiten, wobei vor der Werkstückbearbeitung ein Rundlauffehler (7) und/oder ein Teilungsfehler (8, 9) des Schneidwerkzeuges (1) ermittelt wird und durch die periodische Nichtlinearität des Kopplungsverhältnisses und/oder durch die periodische Änderung des Achsabstandes (a) die auf den Rundlauffehler (7) und/oder den Teilungsfehler (8, 9) resultierenden Flankenlinienformfehler (18) der rechten und/oder linken Zahnflanke (13, 14) vermindert werden, **dadurch gekennzeichnet, dass** die Lage der linken und rechten Schneidkanten (3, 4) des auf der Werkzeugspindel aufgespannten Schneidrades (1) vermessen werden und die linken und rechten Zahnflanken (13, 14) in aufeinander folgenden Arbeitsschritten jeweils gesondert feinbearbeitet werden.

2. Verfahren nach Anspruch 1, **dadurch gekennzeichnet, dass** das Schneidwerkzeug ein Wälzschälwerkzeug ist, welches in Erstreckungsrichtung der Zahnflanken (13, 14) vorgeschoben wird.

3. Verfahren nach einem der vorhergehenden Ansprüche, **dadurch gekennzeichnet, dass** die Lage der Kopfschneidkante (5) des auf der Werkzeugspindel aufgespannten Schneidrades (1) vermessen wird.

4. Verfahren nach einem der vorhergehenden Ansprüche, **dadurch gekennzeichnet, dass** die Werkzeugspindel und die Werkstückspindel von elektronisch gekoppelten elektrischen Einzelantrieben drehangetrieben werden.

5. Verfahren nach einem der vorgehenden Ansprüche, **dadurch gekennzeichnet, dass** die Lage der Schneidkanten (3, 4) und/oder der Kopfschneidkante (5) mit einem am Maschinengehäuse oder Maschinengestell angeordneten Messwerkzeug erfolgt.

6. Vorrichtung zur Durchführung des Verfahrens nach einem der vorhergehenden Ansprüche, mit einer Werkstückspindel zum Aufspannen des Werkrades (11) und einer Werkzeugspindel zum Aufspannen des Schneidwerkzeuges (1) und mit einer Steuereinrichtung, die so eingerichtet ist, dass die Werkzeugspindel und die Werkstückspindel in einem eine periodische Nichtlinearität aufweisenden Kopplungsverhältnis ihrer Drehwinkel (ϕ₂, ϕ₁) und/oder in einem sich periodisch ändernden Achsabstand (a) voneinander drehantreibbar sind, so dass die Schneidzähne (2) spanabtragend mit linken und rechten Schneidkanten (3, 4) linke und rechte Zahnflanken (13, 14) der Zähne (12, 12') des Werkrades (11) bearbeiten, wobei die Steuereinrichtung so eingerichtet ist, dass mit einem vor der Werkstückbearbeitung ermittelten Rundlauffehler (7) und/oder Teilungsfehler (8, 9) des mit der Werkzeugspindel verbundenen Schneidwerkzeuges (1) zur Verminderung der aus dem Rundlauffehler (7) und dem Teilungsfehler (8, 9) resultierenden Flankenlinienformfehler (18, 19) der rechten und linken Zahnflanken (13, 14) die Werkstückspindel und die Werkzeugspindel mit dem periodisch nicht linearen Kopplungsverhältnis antreibbar sind und/oder der Achsabstand periodisch veränderbar ist, **dadurch gekennzeichnet, dass** die Steuereinrichtung derart eingerichtet ist, dass die Lage der linken und rechten Schneidkanten (3, 4) des auf der Werkzeugspindel aufgespannten Schneidrades (1) vermessen werden und die linken und rechten Zahnflanken (13, 14) in aufeinander folgenden Arbeitsschritten jeweils gesondert feinbearbeitet werden.

7. Vorrichtung nach Anspruch 6, **dadurch gekennzeichnet, dass** die Vorrichtung eine Werkzeugmaschine mit einem die Werkstückspindel und die Werkzeugspindel tragenden Gehäuse ist und am Gehäuse ein Messwerkzeug (21) befestigt ist, um die Lage der linken und rechten Schneidkanten (3, 4) und/oder der Kopfschneidkante (5) eines auf der Werkzeugspindel aufgespannten Schneidrades zu vermessen.

8. Vorrichtung zur Durchführung des Verfahrens nach einem der Ansprüche 1 bis 5, mit einer Werkstückspindel zum Aufspannen des Werkrades (11) und einer Werkzeugspindel zum Aufspannen des Schneidwerkzeuges (1) und mit einer Steuereinrichtung, die so eingerichtet ist, dass die Werkzeugspindel und die Werkstückspindel in einem eine periodische Nichtlinearität aufweisenden Kopplungsverhältnis ihrer Drehwinkel (ϕ₂, ϕ₁) und/oder in einem sich periodisch ändernden Achsabstand (a) voneinander drehantreibbar sind, so dass die Schneidzähne (2) spanabtragend mit linken und rechten Schneidkanten (3, 4) linke und rechte Zahnflanken (13, 14) der Zähne (12, 12') des Werkrades (11) bearbeiten, wobei die Steuereinrichtung so eingerichtet ist, dass mit einem vor der Werkstückbearbeitung ermittelten Rundlauffehler (7) und/oder Teilungsfehler (8, 9) des mit der Werkzeugspindel verbundenen Schneidwerkzeuges (1) zur Verminderung der aus dem Rundlauffehler (7) und dem Teilungsfehler (8, 9) resultierenden Flankenlinienformfehler (18, 19) der rechten und linken Zahnflanken (13, 14) die Werkstückspindel und die Werkzeugspindel mit dem periodisch nicht linearen Kopplungsverhältnis antreibbar sind und/oder der Achsabstand periodisch veränderbar ist, mit einem Gehäuse, welches die Werkstückspindel und die Werkzeugspindel trägt, **dadurch gekennzeichnet, dass** am Gehäuse ein Messwerkzeug (21) befestigt ist, mit dem die Lage der linken und der rechten Schneidkante (3, 4) vermessen werden kann.

## Claims

1. A method for producing a toothed workpiece gear (11), wherein the workpiece gear (11) is clamped or fastened to a workpiece spindle and wherein a cutting tool (1) having cutting teeth (2) is clamped or fastened to a tool spindle, the tool spindle and the workpiece spindle are rotationally driven at a coupling ratio of the angles of rotation (ϕ₂, ϕ₁) thereof having a periodic non-linearity and/or at an axial distance (a) from each other that changes periodically, and the cutting teeth (2) machine left and right tooth flanks (13, 14) of the teeth (12, 12') of the workpiece gear (11) by means of left and right cutting edges (3, 4) in a chip-removing manner, wherein a radial run-out error (7) and/or a pitch error (8, 9) of the cutting tool (1) is determined before the workpiece is machined and the flank line shape errors (18) of the right and/or left tooth flank (13, 14) resulting from the radial run-out error (7) and /or the pitch error (8, 9) are reduced by means of the periodic non-linearity of the coupling ratio and/or by means of the periodic change in the axial distance (a), **characterized in that** the position of the left and right cutting edges (3, 4) of the cutting wheel (1) clamped onto the tool spindle are measured and the left and right tooth flanks (13,14) are in each case fine-machined separately in consecutive operating steps.

2. The method according to claim 1, **characterized in that** the cutting tool is a hob peeling tool, which is advanced in the direction of extension of the tooth flanks (13, 14).

3. The method according to one of the preceding claims, **characterized in that** the position of the head cutting edge (5) of the cutting wheel (1) clamped onto the tool spindle is measured.

4. The method according to one of the preceding claims, **characterized in that** the tool spindle and the workpiece spindle are rotationally driven by electronically coupled electric individual drives.

5. The method according to one of the preceding claims, **characterized in that** the position of the cutting edges (3, 4) and/or of the head cutting edge (5) is carried out by means of a measuring tool arranged on the machine housing or machine frame.

6. A device for carrying out the method according to one of the preceding claims, comprising a workpiece spindle for clamping the workpiece gear (11) and a tool spindle for clamping the cutting tool (1) and comprising a control device, which is equipped in such a way that the tool spindle and the workpiece spindle can be rotationally driven at a coupling ratio of the angles of rotation (ϕ₂, ϕ₁) thereof having a periodic non-linearity and/or at an axial distance (a) from each other that changes periodically, so that the cutting teeth (2) machine left and right tooth flanks (13, 14) of the teeth (12, 12') of the workpiece gear (11) by means of left and right cutting edges (3, 4) in a chip-removing manner, wherein the control device is equipped in such a way that, by means of a radial run-out error (7) and/or pitch error (8, 9), which is determined before the workpiece is machined, of the cutting tool (1), which is connected to the tool spindle, the workpiece spindle and the tool spindle can be driven with the periodically non-linear coupling ratio and/or the axial distance can be changed periodically to reduce the flank line shape errors (18, 19) of the right and left tooth flanks (13, 14) resulting from the radial run-out error (7) and the pitch error (8, 9), **characterized in that** the control device is equipped in such a way that the position of the left and right cutting edges (3, 4) of the cutting wheel (1) clamped onto the workpiece spindle are measured and the left and right tooth flanks (13, 14) are in each case fine-machined separately in consecutive operating steps.

7. The device according to claim 6, **characterized in that** the device is a machine tool, comprising a housing, which supports the workpiece spindle and the tool spindle, and a measuring tool (21) is fastened to the housing in order to measure the position of the left and right cutting edges (3, 4) and/or of the head cutting edge (5) of a cutting wheel clamped onto the workpiece spindle.

8. A device for carrying out the method according to one of claims 1 to 5, comprising a workpiece spindle for clamping the workpiece gear (11) and a tool spindle for clamping the cutting tool (1) and comprising a control device, which is equipped in such a way that the tool spindle and the workpiece spindle can be rotationally driven at a coupling ratio of the angles of rotation (ϕ₂, ϕ₁) thereof having a periodic non-linearity and/or at an axial distance from each other that changes periodically, so that the cutting teeth (2) machine left and right tooth flanks (13, 14) of the teeth (12, 12') of the workpiece gear (11) by means of left and right cutting edges (3, 4) in a chip-removing manner, wherein the control device is equipped in such a way that, by means of a radial run-out error (7) and/or pitch error (8, 9), which is determined before the workpiece is machined, of the cutting tool (1), which is connected to the tool spindle, the workpiece spindle and the tool spindle can be driven with the periodically non-linear coupling ratio and/or the axial distance can be changed periodically to reduce the flank line shape errors (18, 19) of the right and left tooth flanks (13, 14) resulting from the radial run-out error (7) and the pitch error (8, 9)comprising a housing carrying the workpiece spindle and the tool spindle, **characterized in that** a measuring tool (21), by means of which the position of the left and of the right cutting edge (3,4) can be measured, is fastened to the housing.

## Revendications

1. Procédé de fabrication d'une roue dentée (11), dans lequel la roue à usiner (11) est serrée ou fixée sur une broche porte-pièce et un outil de coupe (1) ayant des dents de coupe (2) est serrée ou fixée sur une broche porte-outil, la broche porte-outil et la broche porte-pièce sont entraînées en rotation avec un rapport de couplage de leur angle de rotation (ϕ₂, ϕ₁) présentant une non-linéarité périodique et/ou avec un entraxe (a) changeant périodiquement et les dents de coupe (2) avec des arêtes de coupe gauche et droite (3, 4) usinent avec enlèvement de copeaux des flancs de dent gauche et droit (13, 14) des dents (12, 12') de la roue (11), dans lequel, avant l'usinage de la pièce, on détermine une erreur de concentricité (7) et/ou une erreur de pas (8, 9) de l'outil de coupe (1) et l'erreur de forme de la ligne de flanc du flanc de dent droit et/ou gauche (13, 14) due à l'erreur de concentricité (7) et/ou à l'erreur de pas (8, 9), est limitée par la non-linéarité périodique du rapport de couplage et/ou par le changement périodique de l'entraxe (a), **caractérisé en ce qu'**est mesurée la position des arêtes de coupe gauche et droite (3, 4) de la roue de coupe (1) serrée sur la broche porte-outil et **en ce que** les flancs de dent gauche et droit (13, 14) sont usinés séparément en finition par étapes successives.

2. Procédé selon la revendication 1, **caractérisé en ce que** l'outil de coupe est un outil de taille par développante qui est avancé dans la direction d'extension des flancs de dents (13, 14).

3. Procédé selon l'une des revendications précédentes, **caractérisé en ce que** l'on mesure la position de l'arête de coupe de tête (5) de la roue de coupe (1) serrée sur la broche porte-outil.

4. Procédé selon l'une des revendications précédentes, **caractérisé en ce que** la broche porte-outil et la broche porte-pièce sont entraînées en rotation par des entraînements électriques individuels couplés électroniquement.

5. Procédé selon l'une des revendications précédentes, **caractérisé en ce que** la position des arêtes de coupe (3, 4) et/ou de l'arête de coupe de tête (5) est mesurée avec un outil de mesure disposé sur le carter ou le bâti de la machine.

6. Dispositif pour la mise en oeuvre du procédé selon l'une des revendications précédentes, comprenant une broche porte-pièce pour le serrage de la roue à usiner (11) et une broche porte-pièce pour le serrage de l'outil de coupe (1), et comprenant un dispositif de commande qui est conçu de telle sorte que la broche porte-outil et la broche porte-pièce puissent être entraînées en rotation avec un rapport de couplage de leur angle de rotation (ϕ₂, ϕ₁) présentant une non-linéarité périodique et/ou avec un entraxe (a) changeant périodiquement de manière que les dents de coupe (2) avec des arêtes de coupe gauche et droite (3, 4) usinent avec enlèvement de copeaux des flancs de dent gauche et droit (13, 14) des dents (12, 12') de la roue (11), dans lequel le dispositif de commande est conçu de manière que, avec une erreur de concentricité (7) et/ou une erreur de pas (8, 9) de l'outil de coupe (1) lié à la broche porte-outil, déterminées avant l'usinage de la pièce, la broche porte-pièce et la broche porte-outil puissent être entraînées avec le rapport de couplage périodiquement non linéaire et/ou que l'entraxe puisse être modifié périodiquement pour limiter l'erreur de forme de la ligne de flanc des flancs de dent droit et/ou gauche (13, 14) due à l'erreur de concentricité (7) et/ou à l'erreur de pas (8, 9), **caractérisé en ce que** le dispositif de commande est conçu de manière que soit mesurée la position des arêtes de coupe gauche et droite (3, 4) de la roue de coupe (1) serrée sur la broche porte-outil et que les flancs de dent gauche et droit (13, 14) soient chacun usinés séparément en finition dans des étapes successives.

7. Dispositif selon la revendication 6, **caractérisé en ce que** le dispositif est une machine-outil avec un carter portant la broche porte-pièce et la broche porte-outil et **en ce qu'**un outil de mesure (21) est fixé au carter pour mesurer la position des arêtes de coupe gauche et droite (3, 4) et/ou l'arête de coupe de tête (5) d'une roue de coupe serrée sur la broche porte-outil.

8. Dispositif pour la mise en oeuvre du procédé selon l'une des revendications 1 à 5, comprenant une broche porte-pièce pour le serrage de la roue à usiner (11) et une broche porte-pièce pour le serrage de l'outil de coupe (1), et un dispositif de commande qui est conçu de telle sorte que la broche porte-outil et la broche porte-pièce puissent être entraînées en rotation avec un rapport de couplage de leur angle de rotation ϕ₂, ϕ₁ présentant une non-linéarité périodique et/ou avec un entraxe (a) changeant périodiquement de manière que les dents de coupe (2) avec des arêtes de coupe gauche et droite (3, 4) usinent avec enlèvement de copeaux des flancs de dent gauche et droit (13, 14) des dents (12, 12') de la roue (11), dans lequel le dispositif de commande est conçu de manière que, avec une erreur de concentricité (7) et/ou une erreur de pas (8, 9) de l'outil de coupe (1) lié à la broche porte-outil, déterminées avant l'usinage de la pièce, la broche porte-pièce et la broche porte-outil puissent être entraînées avec le rapport de couplage périodiquement non linéaire et/ou que l'espacement axial puisse être modifié périodiquement pour limiter l'erreur de forme de la ligne de flanc des flancs de dent droit et/ou gauche (13, 14) due à l'erreur de concentricité (7) et/ou à l'erreur de pas (8, 9), et comprenant un carter qui porte la broche porte-pièce et la broche porte-outil, **caractérisé en ce qu'**un outil de mesure (21) est fixé sur le carter avec lequel la position de l'arête de coupe gauche et droite (3, 4) peut être mesurée.
